# EUROPEAN PATENT SPECIFICATION

(11) **EP 2 421 303 B1**
(45) Date of publication and mention of the grant of the patent: **07.08.2013**
(21) Application number: 11183785.2
(22) Date of filing: 22.01.2009
(51) Int. Cl.: H04W 48/16, H04W 36/38

(54) **Method for wireless system selection optimization**
Verfahren zur Optimierung der Auswahl drahtloser Systeme
Procédé pour l'optimisation de la sélection d'un système sans fil

(43) Date of publication of application: 22.02.2012
(62) Divisional of application: 09151086.7
(73) Proprietor: Research In Motion Limited, Waterloo, ON N2L 3W8 (CA)
(72) Inventor: Plestid, Trevor, Waterloo, Ontario N2L 3W8 (CA)
(74) Representative: Patel, Binesh

(56) References cited:
- WO-A-02/076117
- WO-A-2007/103975
- US-A1- 2009 143 023

## Description

### TECHNICAL FIELD

The present disclosure relates to wireless mobile networks and in particular to system selection by a wireless mobile device during initialization on a wireless network.

### BACKGROUND

In 3GPP wireless network deployments, carriers or service providers deploy multiple frequencies for distributing handling traffic capacity. During initialization, for example of a factory fresh device, or re-selection a wireless mobile device must scan a wide frequency range to determine the appropriate ARFCN (absolute radio frequency channel number) to enable access to the network as it has no knowledge yet as to which frequency is to be utilized. An exhaustive search can take a considerable length of time because there are a large number of potential frequencies to be scanned delaying a users initial access to the system. The scan typically occurs during initial start-up or when a 'full reset' type event occurs requiring the wireless mobile device to re-sync to the network.

PCT application WO2007/103975 describes techniques for performing network selection using information stored at a terminal. The terminal may store coverage information for previously detected wireless networks, cell information for previously detected cells in wireless networks, usage information for previously accessed wireless networks, availability information for previously detected wireless networks, almanac information for cells in wireless networks.

PCT application 02/076117 describes a mobile device, and a method of connecting a mobile device to a preferred communication system. The mobile communication device includes a signal sender, a signal receiver, and a processor and memory. The processor and memory include a static table, and are in communication with the signal sender and the signal receiver. The processor and memory match a location of the device directly to a preferred system. The mobile communication system includes a base station and the mobile communication device. The method includes the step of locating of the mobile communication device, the step of converting the location generated into a position range, the step of matching the position range to a preferred SID index for the position range using the lookup table, the step of selecting the preferred SID from a roaming list, wherein the preferred SID is correspondent to the preferred SID index, and the step of connecting the mobile communication device to a channel correspondent to the preferred system indicated by the preferred SID.

There is therefore a need for improved system selection by wireless mobile devices that reduces system access time, especially initial system access time.

In accordance with an aspect of the present disclosure there is provided a method of system selection in a wireless mobile device, the wireless mobile device operable on a 3GPP wireless network. An absolute radio frequency channel number (ARFCN) table is stored in a memory of the wireless mobile device. Location data associated with the wireless device is then retrieved prior to accessing the wireless network. An absolute radio frequency channel number (ARFCN) associated with the retrieved location data is determined from the ARFCN table stored in memory and system selection is then performed using the determined ARFCN.In accordance with another aspect of the present disclosure there is provided a wireless mobile device in a 3GPP wireless network. The wireless mobile device comprises a memory and a control processor for executing instructions in the memory. The instructions comprising retrieving location data associated with the wireless device; determining an absolute radio frequency channel number (ARFCN) associated with the location data from a ARFCN table stored in memory in the wireless mobile device; and performing system selection using the determined ARFCN.

In accordance with yet another aspect of the present disclosure there is also provided a method of enabling system selection by a plurality of wireless mobile devices in a 3GPP wireless network. An absolute radio frequency channel number (ARFCN) table is generated comprising location data and one or more associated ARFCNs. The ARFCN table is sent to each of the plurality of wireless mobile devices. Each of the wireless mobile devices retrieves an inferred location based upon carrier branding information associated with the operating software load of the wireless mobile device or preferred network data stored on a subscriber identify module (SIM) and associated with the wireless mobile device prior to first initial access of the wireless network.

In accordance with still yet another aspect of the present disclosure there is provided a system for enabling system selection by a plurality of wireless mobile devices in a 3GPP wireless network. The system comprising a server and the plurality of wireless mobile devices. The server comprising a memory and a processor for executing instructions in the memory. An absolute radio frequency channel number (ARFCN) table is generated comprising location data and one or more associated ARFCNs. The ARFCN table is sent to each of the plurality of wireless mobile devices. Each of the plurality of wireless mobile devices retrieves an inferred location based upon carrier branding information associated with the operating software load of the wireless mobile device or preferred network data stored on a subscriber identify module (SIM) and associated with the wireless mobile device prior to first initial access of the wireless network.

### BRIEF DESCRIPTION OF THE DRAWINGS

Further features and advantages of the present disclosure will become apparent from the following detailed description, taken in combination with the appended drawings, in which:
Figure 1 shows a block diagram of a wireless mobile device;
Figure 2 shows a system diagram of server based system selection optimization;
Figure 3 shows a method of ARFCN selection in a wireless mobile device using internal location data;
Figure 4 shows a method of ARFCN selection in a wireless mobile device using a GPS location data; and
Figure 5 shows a method of generating and maintaining ARFCN tables at a server.

It will be noted that throughout the appended drawings, like features are identified by like reference numerals.

### DETAILED DESCRIPTION

3GPP wireless networks are uniquely identified by a specific Mobile Country Code (MCC) and a specific Mobile Network Code (MNC). Wireless mobile devices are provisioned by carriers (service providers) to have a preferred MCC and MNC. In addition, when the carrier has roaming agreements a preferred list may be stored in a Subscriber Identity Module (SIM), a Universal SIM (USIM), or some other non-volatile memory module resident within the wireless mobile device. The MCC and MNC is utilized by the wireless mobile device to determine which system or network it should be operating on. However, the device must still scan the available frequencies to determine the appropriate ARFCN (absolute radio frequency channel number) to access the system. As wireless mobile devices have no notion of which ARFCNs to first scan, the scan is exhaustive which can take a very long time.

To accelerate the ability of a wireless mobile device to access a system during initialization or re-selection, a table or service book identifying known ARFCNs associated with systems is provided. The wireless mobile device can then initiate scanning to access the system using a known ARFCN associated with the likely system rather than having to scan all possible ARFCNs. The table can be provisioned during manufacture or delivered to the wireless mobile device upon registration in the field over-the-air for storage with the device. The table identifies routing area identifier (RAI) defining a MCC.MNC and an associated ARFCN for the particular network. When the wireless mobile device must acquire a system, location related data such as the MCC.MNC associated with the device can be determined from information stored on the SIM card in the device. Alternatively, location data can be based upon proprietary handset branding data associated with the operating software load in the device stored in flash memory 144. This information is then used to look up an ARFCN associated with the RAI combination enabling the device to tune directly to the ARFCN reducing required search time. The RAI in the table may include LAC (location area code) and RAC (routing area code) information providing additional granularity if different ARFCN's are used throughout the system. Alternatively, a GPS (Global Positioning System) receiver integrated in the device may be used to determine a location of the device prior to initialization enabling a location look-up in the ARFCN table. By providing an ARFCN to the device prior to network access initial scans are much quicker thus decreasing the effective "time to find first channel" when powering on for the first time and enhancing the users first use experience. Further, even subsequent to a successful network access, the handset system selection may be improved with prior knowledge of ARFCNs in it's current location. Examples are when a handset needs to rescan, for example, within RF coverage holes, or when a users manual wishes to rescan for frequencies.

The ARFCN table may be generated based upon information provided directly by carriers and stored on a server connected to the network or accessible during manufacturing or provided by a protocol where handsets already in field report in to a central server the ARFCNs that are being seen. The table may be retrieved from the server and provided to a mobile device at manufacture or during initial programming. In addition the server may be connected to one or more networks enabling updates to the ARFCN table to be received from carrier or from devices on the networks to update ARFCN table information. The updated ARFCN tables can then be provided to devices as required.

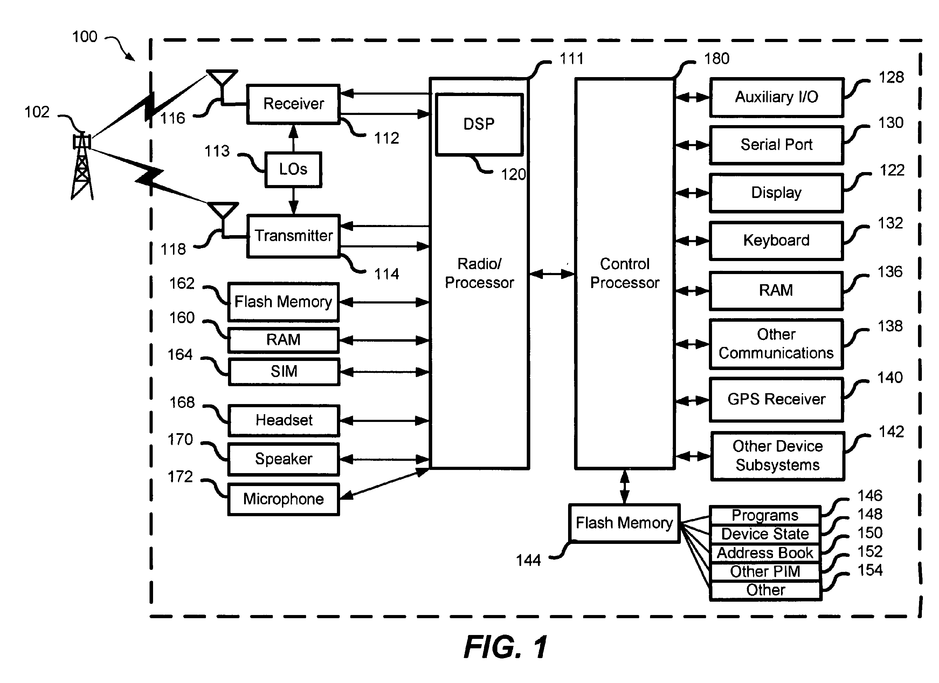

Figure 1 is a block diagram of a wireless mobile device 100 incorporating a communication subsystem having both a receiver 112 and a transmitter 114, as well as associated components such as one or more embedded or internal antenna elements 116 and 118, local oscillators (L0s) 113, and a processing module such as a digital signal processor (DSP) 120. The particular design of the communication subsystem will be dependent upon the communication network in which the device is intended to operate such as in a GSM, EDGE, UMTS, or 3GPP LTE networks.

The wireless mobile device 100 performs synchronization, registration or activation procedures by sending and receiving communication signals over the network 102. Signals received by antenna 116 through communication network 100 are input to receiver 112, which may perform such common receiver functions as signal amplification, frequency down conversion, filtering, channel selection and the like, and in the example system shown in Figure 1, analog to digital (A/D) conversion. A/D conversion of a received signal allows more complex communication functions such as demodulation, decoding and synchronization to be performed in the DSP 120.

In a similar manner, signals to be transmitted are processed, including modulation and encoding for example, by DSP 120 and input to transmitter 114 for digital to analog conversion, frequency up conversion, filtering, amplification and transmission over the communication network 102 via antenna 118. DSP 120 not only processes communication signals, but also provides for receiver and transmitter control. For example, the gains applied to communication signals in receiver 112 and transmitter 114 may be adaptively controlled through automatic gain control algorithms implemented in DSP 120.

Wireless mobile device 100 preferably includes a radio processor 111 and a control processor 180 which together control the overall operation of the device. DSP 120 is located on radio processor 111. Communication functions are performed through radio processor 111.

Radio processor 111 interacts with receiver 112 and transmitter 114, and further with flash memory 162, random access memory (RAM) 160, the subscriber identity module 164, a headset 168, a speaker 170, and a microphone 172.

Control processor 180 interacts with further device subsystems such as the display 122, flash memory 144, random access memory (RAM) 136, auxiliary input/output (I/O) subsystems 128, serial port 130, keyboard 132, other communications 138, GPS receiver 140 and other device subsystems generally designated as 142.

Some of the subsystems shown in Figure 1 perform communication-related functions, whereas other subsystems may provide "resident" or on-device functions. Notably, some subsystems, such as keyboard 132 and display 122, for example, may be used for both communication-related functions, such as entering a text message for transmission over a communication network, and device-resident functions such as a calculator or task list.

Software used by radio processor 111 and control processor 180 is preferably stored in a persistent store such as flash memory 144 and 162, which may instead be a read-only memory (ROM) or similar storage element (not shown). Those skilled in the art will appreciate that the operating system, specific device applications, or parts thereof, may be temporarily loaded into a volatile memory such as RAM 136 and RAM 160. Received communication signals may also be stored in RAM 136.

As shown, flash memory 144 can be segregated into different areas for computer programs 146, device state 148, address book 150, other personal information management (PIM) 152 and other functionality such as the ARFCN table generally designated as 154. These different storage types indicate that each program can allocate a portion of flash memory 144 for their own data storage requirements. Control processor 180, in addition to its operating system functions, preferably enables execution of software applications on the mobile station.

For voice communications, overall operation of wireless mobile device 100 is similar, except that received signals would preferably be output to the speaker 170 or headset 168 and signals for transmission would be generated by the microphone 172. Alternative voice or audio I/O subsystems, such as a voice message recording subsystem, may also be implemented on mobile station 102.

Serial port 130 in Figure 1 would normally be implemented in a personal digital assistant (PDA)-type wireless mobile device for which synchronization with a user's desktop computer (not shown) may be desirable, but is an optional device component. Such a port 130 would enable a user to set preferences through an external device or software application and would extend the capabilities of wireless mobile device 100 by providing for information or software downloads to wireless mobile device 100 other than through a wireless communication network. The alternate download path may for example be used to load an encryption key onto the device through a direct and thus reliable and trusted connection to thereby enable secure device communication.

Other device subsystems 142, such as a short-range communications subsystem, is a further optional component which may provide for communication between wireless mobile device 100 and different systems or devices, which need not necessarily be similar devices. For example, the subsystem 142 may include an infrared device and associated circuits and components or a Bluetooth^{TM} communication module to provide for communication with similarly enabled systems and devices.

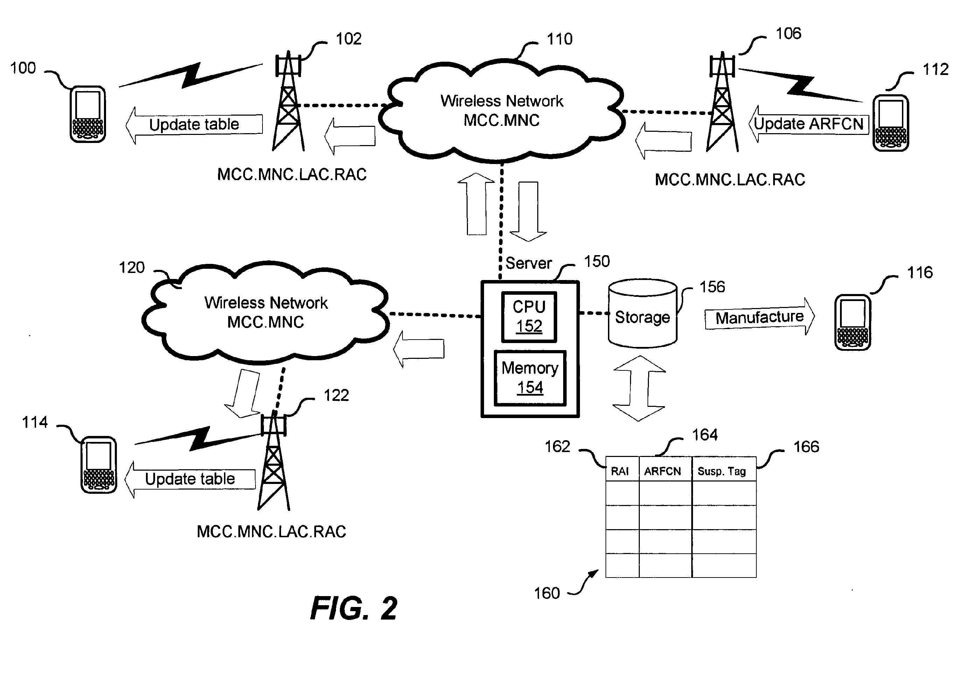

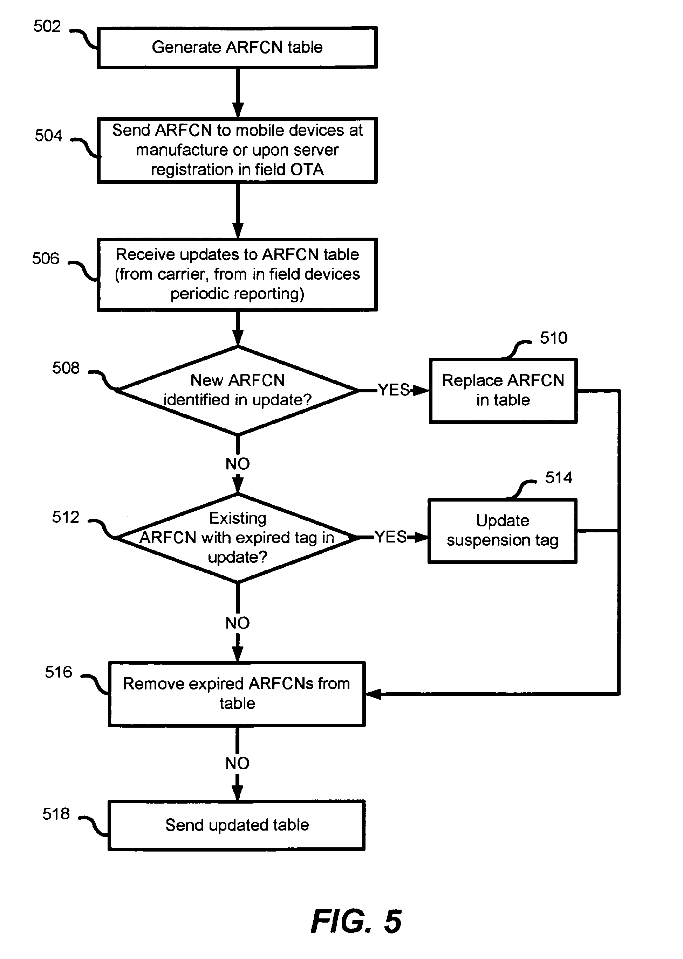

Figure 2 shows a system diagram of server based system selection optimization. Server 150 may be coupled to storage device 156. The storage device 156 stores ARFCN table 160 and computer executable code for generating the ARFCN table and sending and receiving updates. The ARFCN table comprises an entry for every RAI (routing area identifier) 162. Depending on the granularity required, the RAI may be solely based upon MCC.MNC or be further resolved by MCC.MNC.LAC.RAC, where LAC (location area code) and RAC (routing area code) are used if the mobile device has data associated with the last LAC.RAC used while accessing the network. One or more ARFCNs 164 can then be associated with each RAI entry. The ARFCN may be provided by a carrier or by wireless mobile device provided updates as discussed in connection with Figure 5. If device updates to the ARFCN table are enabled, a suspension tag 166 can also be identified for each entry. The suspension tag 166 identifies a date at which the identified ARFCN is deemed be expired and will be removed form the table unless an update is received from a device on the network identifying the ARFCN as active. The wireless mobile device uses the tag as a trigger to only send an update only when necessary. The ARFCN table may also include GPS coordinates ,providing a latitude and longitude, (not shown) associated with each RAI entry if a GPS receiver coupled to device is used during initialization or re-acquisition. The GPS coordinates in the ARFCN may be based on a range defining a service area for the RAI and ARFCN.

Each system 110 and 120 have a unique MCC.MNC. Base stations 102, 106 and 122 can then be assigned to a unique MCC.MNC.LAC.RAC if different AFRCN are utilized within the same MCC.MNC network. The wireless network 110 and 120 are in communication with server 150. The server 150 may be a central server or be resident on each carriers network. The server 150 contains software stored in memory 154 and executed by one or more central processing units 152 for generating and sending (or pushing) ARFCN tables to devices in addition to receiving updates from wireless devices accessing the system. During manufacture or initial programming by the carrier a wireless mobile device 116 receives the ARFCN table or service book which would be stored within non-volatile memory 144 of the device.

In additional to directly editing the ARFCN table, updates may be provided from devices operating on the networks once initialized. For example, device 112 can provide an update to the server 150 identifying an ARFCN change associated either with the carrier's wireless network 110 MCC.MNC or even the BTS 106 MCC.MNC.LAC.RAC. The updates are provided once the device is operating on the network and has determined that the ARFCN used for network access does not match the ARFCN identified in the ARFCN table. Updates to the ARFCN table can then be pushed to devices on the network such as devices 100 and 114 at periodic intervals to unsure the most current information is available.

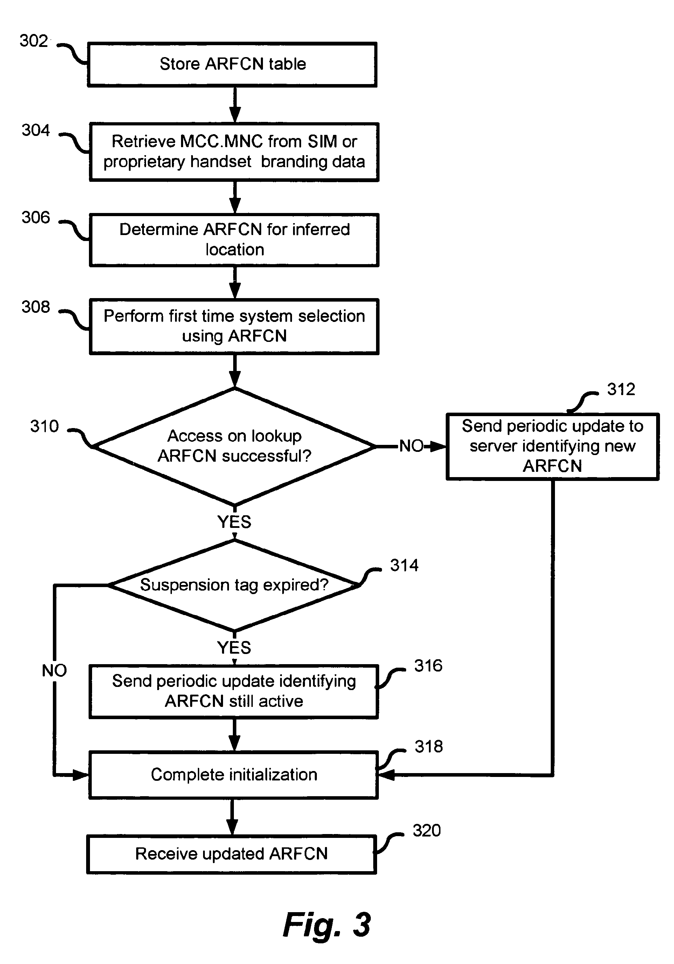

Figure 3 shows a method of ARFCN selection using a network identifier retrieved from the wireless mobile device 100. This method is distinct in that it bootstraps the handset with information on the assumption that most times, the initial use will be in the home MCC.MNC on particular ARFCNs. The wireless mobile device 100 receives an ARFCN table either during manufacture or initial programming or provisioning. The ARFCN is then stored 302 in memory of the wireless mobile device. When the device powers up, prior to acquiring a network and registering on the network, the device retrieves location data to determine or infer 304 what is the primary carrier associated with the device either by retrieving MCC.MNC information from the SIM or by accessing proprietary handset branding The handset may use and empty MRU (most recently used AFRCN) as a trigger to determine its likely location via carrier branding and thereby make use of the ARFCN table. information which identifies an associated MCC.MNC. A look-up 306 in the ARFCN table is performed to determine the associated ARFCN for the MCC.MNC. System selection is then performed 308 using the selected ARFCN frequency or a series of applicable ARFCNs. If the ARFCN used is not successful at accessing the system, NO at 310, a periodic update can then be sent 312 over the wireless network to server 150 providing details regarding the MCC.MNC and the ARFCN used to access the system. If the system is accessed using the ARFCN, YES at 310, it can then be determined if the suspension tag associated with the ARFCN has expired 314. The suspension tag expiry is defined in relation to a date or time interval associated with the RAI entry in the ARFCN table 160 assigned by the server upon creation of the table. If the tag has expired, YES at 314, a periodic update can be sent to server 150 identifying that the ARFCN is still active 316. The suspension tag can then be increased at the next ARFCN update. If the suspension tag has not expired, NO at 314, initialization or re-acquisition is completed at 318. At 320 the device may then receive an updated ARFCN table for use during future re-initializations.

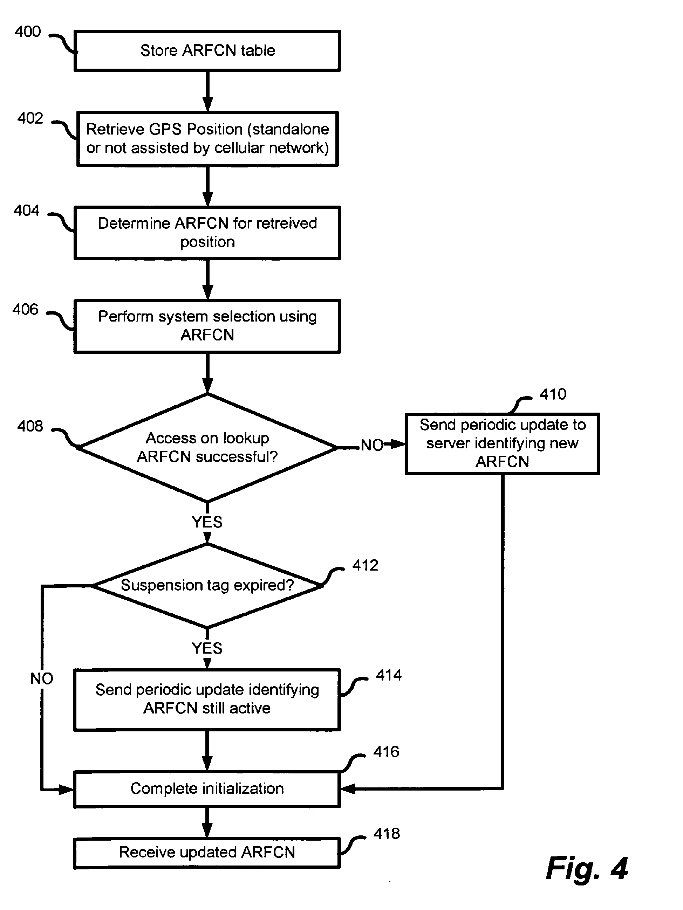

Figure 4 shows a method of system selection using location data such as GPS location data. The wireless mobile device 100 receives an ARFCN table, either during manufacture or initial programming or provisioning. The ARFCN is then stored 400 in memory of the wireless mobile device. The wireless mobile device retrieves GPS location information 402 from an internal GPS receiver or from an external GPS source coupled to the device prior to system access during power up or re-initialization. As the device is not on the network, network assisted GPS is not utilized. A look-up 404 in the ARFCN table is performed to determine the associated ARFCN for the associated location. System selection is then performed 406 using the selected ARFCN frequency. If the ARFCN used is not successful at accessing the system, NO at 408, a periodic update can then be sent 410 to server 150 providing details regarding the GPS location and the ARFCN used to access the system after successful system acquisition. If the system is accessed using the ARFCN, YES at 408, it can then be determined if the suspension tag associated with the ARFCN has expired 412. If the tag has expired, YES at 412, a periodic update can be sent to server 150 identifying that the ARFCN is still active 414. The suspension tag can then be increased at the next ARFCN update. If the suspension tag has not expired, NO at 412, initialization or re-acquisition is completed at 416. At 418 the device may then receive an updated ARFCN table for use during future re-initializations.

Figure 5 shows a method of maintaining ARFCN tables at a server. The server may be used to provide ARFCN a stand alone server or integrated as software with other servers during the manufacturing processes or coupled to the carrier wireless network to provide updates. An initial ARFCN table is generated 502 for loading to the wireless mobile devices. The ARFCN table may be populated by either information provided by carriers or populated based upon data acquired from devices on the associated networks via update messages. The ARFCN table is then sent to mobiles devices either during manufacture or initial programming 504.

Alternatively the table may be provided upon registration of the wireless mobile device with the server over the air and pushed to the device. If the mobile wireless device 100 software is configured to send updates, the server receives updates from information obtained by devices accessing systems or directly provided by carriers 506. If a new ARFCN is identified in the update, YES at 508, the ARFCN for the associated RAI is replaced 510. If the ARFCN is not new, NO at 508, it is then determined if the update is associated with an existing ARFCN that has an expired suspension tag. If the suspension tag is expired in the update, YES at 512, the suspension tag is updated to a new value 514. If the tag in the updated is not expired, NO at 512, expired ARFCNs can then be removed from the table periodically 516 based upon a pre-defined time interval after the suspension tag expiry. The updated table can then be sent to devices 518 or provided for upload to new devices during manufacturing or provisioning.

While a particular embodiment of the present method for providing wireless system selection optimization has been described herein, it will be appreciated by those skilled in the art that changes and modifications may be made thereto without departing from the disclosure in its broadest aspects and as set forth in the following claims.

## Claims

1. A method of system selection in a wireless mobile device (100), the wireless mobile device operable on a 3GPP wireless network (110, 120), the method comprising:
storing (302, 400) in the wireless mobile device, during manufacture, an absolute radio frequency channel number (ARFCN) table (160) in memory of the wireless mobile device comprising a plurality entries, each entry comprising location data and an associated ARFCN identifier;
retrieving (304, 402) an inferred location based upon carrier branding information associated with an operating software load of the wireless mobile device or preferred network data stored on a subscriber identify module (SIM) and associated with the wireless mobile device prior to first initial access of the wireless network;
determining (306, 404) an ARFCN (164) from location data in the ARFCN table based upon the inferred location; and
performing a first system access using the determined ARFCN.

2. The method of claim 1 wherein each entry further comprises a suspension tag (166) identifying an expiry date for each ARFCN after which the ARFCN will be removed from the ARFCN table if inactive.

3. The method of claim 2 wherein performing the first system access using the determined ARFCN further comprises:
sending (312, 410) a periodic update to a server (150) if access on the ARFCN was not successful, the update identifying a new ARFCN not present in the ARFCN table on which the wireless mobile device successfully initialized for the retrieved location data; and
determining (314, 412) if the suspension tag associated with the ARFCN has expired and sending (316, 414) an update to the server (150) identifying that ARFC is still active.

4. The method of any one of claims 1 to 3 wherein the ARFCN table identifies a routing area identifier (RAI) (162) comprising a mobile country code (MCC) and mobile network code (MNC).

5. The method of claim 4 wherein the RAI further comprises a location area code (LAC) and routing area code (RAC).

6. The method of any one of claims 4 or 5 wherein the inferred location data based on a MCC.MNC retrieved from the SIM card.

7. The method of any one of claims 1 to 5 wherein the inferred location data is based upon branding information associated with the operating software load (144) of the wireless mobile device to determine a corresponding MCC.MNC.

8. The method of any one of claims 1 to 7 wherein the stored ARFCN table is updated over-the-air (320) through the wireless network once system access is successful.

9. A wireless mobile device in a 3GPP wireless network (110, 120), the wireless mobile device (100) comprising:
a memory (144); and
a control processor (180) for executing instructions in the memory comprising the method steps of claims 1 to 9.

10. A method of enabling system selection by a plurality of wireless mobile devices (100, 112, 114, 116) in a 3GPP wireless network (110, 120), the method comprising:
generating (502) an absolute radio frequency channel number (ARFCN) table (160) comprising a plurality of entries, each entry comprising location data and an associated ARFCN; and
sending (504) the ARFCN table (160) to each of the plurality of wireless mobile devices at the time of manufacture;
retrieving (304, 402) at the wireless mobile device, an inferred location based upon carrier branding information associated with an operating software load of the wireless mobile device or preferred network data stored on a subscriber identify module (SIM) and associated with the wireless mobile device prior to first initial access of the wireless network.

11. The method of claim 10 wherein the location data is associated with routing area identifiers (RAIs) (162) comprising a mobile country code (MCC) and mobile network code (MNC).

12. The method of any one of claims 10 or 11 wherein the RAI further comprises a location area code (LAC) and routing area code (RAC).

13. The method of any one of claims 10 to 12 wherein the ARFCN table further comprises a suspension tag (166) identifying an expiry period defined a date at which the identified ARFCN is deemed to be expired and will be removed (516) from the table unless an update (514) is received.

14. The method of claim 13 further comprising:
receiving updates (506) from the plurality of wireless mobile devices (100, 112, 114, 116) through the wireless network, the updates providing information for updating new (508) or existing ARFCNs associated with a particular location in the ARFCN table; and
updating (510, 514) entries in the ARFCN table based upon the updates received from the plurality of wireless mobile devices.

15. A system for enabling system selection by a plurality of wireless mobile devices (100, 112, 114, 116) in a 3GPP wireless network, the system comprising:
a server (150), the server comprising:
a memory (152); and
a processor (154) for executing instructions in the memory comprising the steps of:
generating (502) an absolute radio frequency channel number (ARFCN) table (160) comprising a plurality of entries, each entry comprising location data and an associated ARFCN; and
sending (504) the ARFCN table (160) to each of the plurality of wireless mobile devices at the time of manufacture;
and
a wireless mobile device (100) comprising:
a memory (144); and
a control processor (180) for executing instructions in the memory comprising the method steps of:
retrieving (304, 402) at the wireless mobile device an inferred location based upon carrier branding information associated with an operating software load of the wireless mobile device or preferred network data stored on a subscriber identify module (SIM) and associated with the wireless mobile device prior to first initial access of the wireless network.

## Patentansprüche

1. Ein Verfahren zur Systemauswahl in einer drahtlosen mobilen Vorrichtung (100), wobei die drahtlose mobile Vorrichtung in einem drahtlosen 3GPP-Netzwerk (110, 120) betriebsfähig ist, wobei das Verfahren aufweist:
Speichern (302, 400) in der drahtlosen mobilen Vorrichtung, während der Herstellung, einer ARFCN(absolute radio frequency channel number)-Tabelle (160) in einem Speicher der drahtlosen mobilen Vorrichtung, die eine Vielzahl von Einträgen aufweist, wobei jeder Eintrag Positionsdaten und einen assoziierten ARFCN-Identifizierer aufweist;
Abrufen (304, 402) einer abgeleiteten Position basierend auf einer Betreiber-Branding- bzw. Markierungs-Information, die mit einer Betriebssoftwareladung der drahtlosen mobilen Vorrichtung assoziiert ist, oder "bevorzugtes Netzwerk"-Daten, die auf einem Teilnehmeridentifikationsmodul (SIM - subscriber identity module) gespeichert sind und mit der drahtlosen mobilen Vorrichtung assoziiert sind, vor einem ersten anfänglichen Zugriff auf das drahtlose Netzwerk;
Bestimmen (306, 404) einer ARFCN (164) aus Positionsdaten in der ARFCN-Tabelle basierend auf der abgeleiteten Position; und Durchführen eines ersten Systemzugriffs unter Verwendung der bestimmten ARFCN.

2. Das Verfahren gemäß Anspruch 1, wobei jeder Eintrag weiter ein Suspension-Tag (166) aufweist, das ein Ablaufdatum für jede ARFCN identifiziert, nach dem die ARFCN aus der ARFCN-Tabelle entfernt wird, wenn inaktiv.

3. Das Verfahren gemäß Anspruch 2, wobei das Durchführen des ersten Systemzugriffs unter Verwendung der bestimmten ARFCN weiter aufweist:
Senden (312, 410) einer periodischen Aktualisierung an einen Server (150), wenn ein Zugriff auf die ARFCN nicht erfolgreich war, wobei die Aktualisierung eine neue ARFCN identifiziert, die in der ARFCN-Tabelle nicht vorhanden ist, auf der die drahtlose mobile Vorrichtung erfolgreich für die abgerufenen Positionsdaten initialisierte; und
Bestimmen (314, 412), ob das Suspension-Tag, das mit der ARFCN assoziiert ist, abgelaufen ist und Senden (316, 414) einer Aktualisierung an den Server (150), die identifiziert, dass die ARFC noch aktiv ist.

4. Das Verfahren gemäß einem der Ansprüche 1 bis 3, wobei die ARFCN-Tabelle einen Routing-Bereichs-Identifizierer (RAI - routing area identifier) (162) identifiziert, der einen mobilen Ländercode (MCC - mobile country code) und einen mobilen Netzwerkcode (MNC - mobile network code) aufweist.

5. Das Verfahren gemäß Anspruch 4, wobei der RAI weiter eine Ortsnetzkennzahl (LAC - location area code) und eine Routing-Kennzahl (RAC - routing area code) aufweist.

6. Das Verfahren gemäß einem der Ansprüche 4 oder 5, wobei die abgeleiteten Positionsdaten auf MCC.MNC basieren, abgerufen von der SIM-Karte.

7. Das Verfahren gemäß einem der Ansprüche 1 bis 5, wobei die abgeleiteten Positionsdaten auf einer Markierungs-Information basieren, die mit der Betriebssoftwareladung (144) der drahtlosen mobilen Vorrichtung assoziiert ist, um einen entsprechenden MCC.MNC zu bestimmen.

8. Das Verfahren gemäß einem der Ansprüche 1 bis 7, wobei die gespeicherte ARFCN-Tabelle über-die-Luft (320) durch das drahtlose Netzwerk aktualisiert wird, sobald ein Systemzugriff erfolgreich ist.

9. Eine drahtlose mobile Vorrichtung in einem drahtlosen 3GPP-Netzwerk (110, 120), wobei die drahtlose mobile Vorrichtung (100) aufweist:
einen Speicher (144); und
einen Steuerungsprozessor (180) zum Ausführen von Anweisungen in dem Speicher, die die Verfahrensschritte der Ansprüche 1 bis 9 aufweisen.

10. Ein Verfahren zum Ermöglichen einer Systemauswahl durch eine Vielzahl von drahtlosen mobilen Vorrichtungen (100, 112, 114, 116) in einem drahtlosen 3GPP-Netzwerk (110, 120), wobei das Verfahren aufweist:
Erzeugen (502) einer ARFCN(absolute radio frequency channel number)-Tabelle (160), die eine Vielzahl von Einträgen aufweist, wobei jeder Eintrag Positionsdaten und eine assoziierte ARFCN aufweist; und
Senden (504) der ARFCN-Tabelle (160) an jede der Vielzahl von drahtlosen mobilen Vorrichtungen zu dem Zeitpunkt der Herstellung;
Abrufen (304, 402), an der drahtlosen mobilen Vorrichtung, einer abgeleiteten Position basierend auf einer Betreiber-Markierungs-Information, die mit einer Betriebssoftwareladung der drahtlosen mobilen Vorrichtung assoziiert ist, oder "bevorzugtes Netzwerk"-Daten, die auf einem Teilnehmeridentifikationsmodul (SIM - subscriber identity module) gespeichert sind und mit der drahtlosen mobilen Vorrichtung assoziiert sind, vor einem ersten anfänglichen Zugriff auf das drahtlose Netzwerk.

11. Das Verfahren gemäß Anspruch 10, wobei die Positionsdaten mit Routing-Bereichs-Identifizierern (RAls - routing area identifiers) (162) assoziiert sind, die einen mobilen Ländercode (MCC - mobile country code) und einen mobilen Netzwerkcode (MNC - Mobile Network Code) aufweisen.

12. Das Verfahren gemäß einem der Ansprüche 10 oder 11, wobei der RAI weiter eine Ortsnetzkennzahl (LAC - location area code) und eine Routing-Kennzahl (RAC - routing area code) aufweist.

13. Das Verfahren gemäß einem der Ansprüche 10 bis 12, wobei die ARFCN-Tabelle weiter ein Suspension-Tag (166) aufweist, das eine Ablaufperiode identifiziert, die ein Datum definiert, an dem die identifizierte ARFCN als abgelaufen betrachtet wird und aus der Tabelle entfernt wird (516), außer eine Aktualisierung (514) wird empfangen.

14. Das Verfahren gemäß Anspruch 13, das weiter aufweist:
Empfangen von Aktualisierungen (506) von der Vielzahl von drahtlosen mobilen Vorrichtungen (100, 112, 114, 116) über das drahtlose Netzwerk,
wobei die Aktualisierungen Information liefern zum Aktualisieren von neuen (508) oder existierenden ARFCNs, die mit einer bestimmten Position in der ARFCN-Tabelle assoziiert sind; und
Aktualisieren (510, 514) von Einträgen in der ARFCN-Tabelle basierend auf den Aktualisierungen, die von der Vielzahl von drahtlosen mobilen Vorrichtungen empfangen werden.

15. Ein System zum Ermöglichen einer Systemauswahl durch eine Vielzahl von drahtlosen mobilen Vorrichtungen (100, 112, 114, 116) in einem drahtlosen 3GPP-Netzwerk, wobei das System aufweist:
einen Server (150), wobei der Server aufweist:
einen Speicher (152); und
einen Prozessor (154) zum Ausführen von Anweisungen in dem Speicher, die die Schritte aufweisen:
Erzeugen (502) einer ARFCN(absolute radio frequency channel number)-Tabelle (160), die eine Vielzahl von Einträgen aufweist,
wobei jeder Eintrag Positionsdaten und eine assoziierte ARFCN aufweist; und
Senden (504) der ARFCN-Tabelle (160) an jede der Vielzahl von drahtlosen mobilen Vorrichtungen zu dem Zeitpunkt der Herstellung;
und
eine drahtlose mobile Vorrichtung (100), die aufweist:
einen Speicher (144); und
einen Steuerungsprozessor (180) zum Ausführen von Anweisungen in dem Speicher, die die Verfahrensschritte aufweisen:
Abrufen (304, 402), an der drahtlosen mobilen Vorrichtung, einer abgeleiteten Position basierend auf einer Betreiber-Markierungs-Information, die mit einer Betriebssoftwareladung der drahtlosen mobilen Vorrichtung assoziiert ist, oder "bevorzugtes Netzwerk"-Daten, die auf einem Teilnehmeridentifikationsmodul (SIM - subscriber identity module) gespeichert sind und mit der drahtlosen mobilen Vorrichtung assoziiert sind, vor einem ersten anfänglichen Zugriff auf das drahtlose Netzwerk.

## Revendications

1. Procédé de sélection d'un système sur un dispositif mobile sans fil (100), le dispositif mobile sans fil fonctionnant sur un réseau sans fil 3GPP (110, 120), le procédé comprenant les étapes consistant à :
stocker (302, 400) sur le dispositif mobile sans fil, pendant la fabrication, dans une mémoire du dispositif mobile sans fil, une table de numéros absolus de canaux de radiofréquences (ARFCN pour « *Absolute Radio Frequency Channel Number* ») (160) qui comprend une pluralité d'enregistrements, chaque enregistrement comprenant des données de position et un identificateur associé de numéro ARFCN ;
obtenir (304, 402) une position qui est déduite des informations de marque d'opérateur qui sont associées à une charge de système d'exploitation du dispositif mobile sans fil ou des données de réseau préféré stockées sur un module d'identité d'abonné (SIM pour « *Subscriber Identify Module* ») et associées au dispositif mobile sans fil avant le premier accès au réseau sans fil ;
déterminer (306, 404) un numéro ARFCN (164) dans la table de numéros ARFCN à partir des données de position, en fonction de la position déduite ; et
effectuer un premier accès au système en utilisant le numéro ARFCN déterminé.

2. Procédé selon la revendication 1, dans lequel chaque enregistrement comprend en outre une étiquette de suspension (166) qui identifie une date d'expiration pour chaque numéro ARFCN, après laquelle le numéro ARFCN doit être retiré de la table de numéros ARFCN s'il est inactivé.

3. Procédé selon la revendication 2, dans lequel l'étape consistant à effectuer un premier accès au système en utilisant le numéro ARFCN déterminé comprend en outre les étapes consistant à :
envoyer (312, 410) une mise à jour périodique à un serveur (150) si l'accès au numéro ARFCN n'a pas réussi, la mise à jour identifiant un nouveau numéro ARFCN qui n'est pas présent dans la table de numéros ARFCN et avec lequel le dispositif mobile sans fil a réussi l'initialisation pour les données de localisation obtenues ; et
déterminer (314, 412) si l'étiquette de suspension associée au numéro ARFCN a expiré et envoyer (316, 414) une mise à jour au serveur (150) qui identifie que ce numéro ARFCN est toujours activé.

4. Procédé selon l'une quelconque des revendications 1 à 3, dans lequel la table de numéros ARFCN identifie un identificateur de zone de routage (RAI pour « *Routing* Area *Identifier* ») (162) comprenant un code de pays de mobile (MCC pour « *Mobile Country Code* ») et un code de réseau mobile (MNC pour « *Mobile Network Code* »).

5. Procédé selon la revendication 4, dans lequel l'identificateur RAI comprend en outre un code de zone de position (LAC pour « *Location* Area *Code* ») et un code de zone de routage (RAC pour « *Routing* Area *Code* »).

6. Procédé selon l'une quelconque des revendications 4 et 5, dans lequel les données de position déduites sont fondées sur les codes MCC/MNC lues dans la carte SIM.

7. Procédé selon l'une quelconque des revendications 1 à 5, dans lequel les données de position déduites sont fondées sur des informations de marque associées à la charge de système d'exploitation (144) du dispositif mobile sans fil, afin de déterminer un code MCC/MNC correspondant.

8. Procédé selon l'une quelconque des revendications 1 à 7, dans lequel la table de numéros ARFCN mémorisée est mise à jour par radio (320) par le réseau sans fil lorsque l'accès au système a réussi.

9. Dispositif mobile sans fil sur un réseau sans fil 3GPP (110, 120), le dispositif mobile sans fil (100) comprenant :
une mémoire (144) ; et
un processeur de commande (180) destiné à exécuter des instructions stockées en mémoire qui constituent les étapes de procédé selon les étapes 1 à 9.

10. Procédé permettant la sélection du système par une pluralité de dispositifs mobiles sans fil (100, 112, 114, 116) sur un réseau sans fil 3GPP (110, 120), le procédé comprenant les étapes consistant à :
produire (502) une table de numéros absolus de canaux de radiofréquences (ARFCN pour « *Absolute Radio Frequency Channel Number* ») (160) qui comprend une pluralité d'enregistrements, chaque enregistrement comprenant des données de position et un numéro ARFCN associé ; et
envoyer (504) la table de numéros ARFCN (160) à chacun des dispositifs dans la pluralité de dispositifs mobiles sans fil au moment de la fabrication ;
obtenir (304, 402) sur le dispositif mobile sans fil une position qui est déduite des informations de marque d'opérateur qui sont associées à une charge de système d'exploitation du dispositif mobile sans fil ou des données de réseau préféré stockées sur un module d'identité d'abonné (SIM pour « *Subscriber Identify Module* ») et associées au dispositif mobile sans fil avant le premier accès au réseau sans fil.

11. Procédé selon la revendication 10, dans lequel les données de position sont associées à des identificateurs de zone de routage (RAI pour « *Routing* Area *Identifier* ») (162) comprenant un code de pays de mobile (MCC pour *« Mobile Country Code* ») et un code de réseau mobile (MNC pour « *Mobile Network Code* »).

12. Procédé selon l'une quelconque des revendications 10 et 11, dans lequel l'identificateur RAI comprend en outre un code de zone de position (LAC pour « *Location* Area *Code* ») et un code de zone de routage (RAC pour « *Routing* Area *Code* »).

13. Procédé selon l'une quelconque des revendications 10 à 12, dans lequel la table de numéros ARFCN comprend en outre une étiquette de suspension (166) qui identifie une date d'expiration pour chaque numéro ARFCN, après laquelle le numéro ARFCN est réputé avoir expiré et doit être retiré (516) de la table de numéros ARFCN à moins qu'une mise à jour (514) ne soit reçue.

14. Procédé selon la revendication 13, comprenant en outre les étapes consistant à :
recevoir des mises à jour (506) provenant de la pluralité de dispositifs mobiles sans fil (100, 112, 114, 116) via le réseau sans fil, les mises à jour fournissant des informations afin de mettre à jour des numéros ARFCN nouveaux (508) ou existants qui sont associés à une position particulière dans la table de numéros ARFCN ; et
mettre à jour (510, 514) des rubriques de la table de numéros ARFCN en fonction des mises à jour reçues de la pluralité de dispositifs mobiles sans fil.

15. Système permettant la sélection du système par une pluralité de dispositifs mobiles sans fil (100, 112, 114, 116) sur un réseau sans fil 3GPP, le système comprenant :
un serveur (150), le serveur comprenant
une mémoire (152) ; et
un processeur (154) destiné à exécuter des instructions stockées dans la mémoire qui comprennent les étapes consistant à :
produire (502) une table de numéros absolus de canaux de radiofréquences (ARFCN pour *« Absolute Radio Frequency Channel Number* ») (160) qui comprend une pluralité d'enregistrements, chaque enregistrement comprenant des données de position et un numéro ARFCN associé ; et
envoyer (504) la table de numéros ARFCN (160) à chacun des dispositifs dans la pluralité de dispositifs mobiles sans fil au moment de la fabrication ;
et
un dispositif mobile sans fil (100) comprenant :
une mémoire (144) ; et
un processeur de commande (180) destiné à exécuter des instructions stockées dans la mémoire qui comprennent les étapes consistant à :
obtenir (304, 402) sur le dispositif mobile sans fil une position qui est déduite des informations de marque d'opérateur qui sont associées à une charge de système d'exploitation du dispositif mobile sans fil ou des données de réseau préféré stockées sur un module d'identité d'abonné (SIM pour « *Subscriber Identify Module* ») et associées au dispositif mobile sans fil avant le premier accès au réseau sans fil.
